# EUROPEAN PATENT SPECIFICATION

(11) **EP 4 371 781 B1**
(45) Date of publication and mention of the grant of the patent: **20.08.2025**
(21) Application number: 23205141.7
(22) Date of filing: 23.10.2023
(51) Int. Cl.: B60C 1/00, B60C 11/00, C08K 3/04

(54) **TIRE**
REIFEN
PNEUMATIQUE

(30) Priority: 18.11.2022 JP 2022184846
(43) Date of publication of application: 22.05.2024
(73) Proprietor: Sumitomo Rubber Industries, Ltd., Kobe-shi, Hyogo 651-0072 (JP)
(72) Inventor: TOKIMUNE, Ryuichi, Kobe-shi, 651-0072 (JP)
(74) Representative: Manitz Finsterwald Patent- und Rechtsanwaltspartnerschaft mbB

(56) References cited:
- EP-A1- 3 950 386
- US-A1- 2020 189 318
- US-A1- 2022 194 126

## Description

### TECHNICAL FIELD

The present invention relates to a tire.

### BACKGROUND OF THE INVENTION

A tire is an only part of an automobile transmitting force to a road surface and is required to have enhanced braking performance without slipping even on an icy road surface.

JP 2019-167410 A discloses a method of enhancing braking performance on an icy road surface by compounding eggshell powder or the like in a rubber layer constituting a tread ground-contacting surface to obtain a scratching effect.

### SUMMARY OF THE INVENTION

However, a further improvement of braking performance during running on an icy road (black ice) that it is difficult for a driver to visually recognize has been required. Moreover, in these latter days when performing high speed-running has been not uncommon due to development of automobile roads, improvement of vehicle performance, and the like, performing high-speed running on a black icy is also presumed.

Considering the above-described subject, it is an object of the present invention to improve grip performance of a tire on an icy road during high-speed running.

The present invention relates to the following tire:
A tire comprising a tread part,
wherein the tread part comprises
   a first layer constituting a tread surface, and
   a second layer adjacent to an inner side of the first layer in a tire radial direction,
wherein each of the first layer and the second layer is composed of a rubber composition comprising a rubber component and a recovered carbon black, and
wherein B/C is 1.0 or less, where a content of the recovered carbon black based on 100 parts by mass of a rubber component of a rubber composition constituting the first layer is referred to as C, in parts by mass, and a content of the recovered carbon black based on 100 parts by mass of a rubber component of a rubber composition constituting the second layer is referred to as B, in parts by mass.

According to the present invention, grip performance of a tire on an icy road during high-speed running can be improved.

### BRIEF DESCRIPTION OF THE DRAWINGS

FIG. 1 is a view showing a cross section of a tread part of a tire passing through a tire rotation axis.
FIG. 2 is a schematic view of a ground-contacting surface when a tread part of a tire according to one embodiment of the present invention is pressed against a flat surface.
FIG. 3 is a schematic view of a ground-contacting surface when a tread part of a tire according to another embodiment of the present invention is pressed against a flat surface.

### DETAILED DESCRIPTION

A tire that is one embodiment of the present invention is a tire comprising a tread part, wherein the tread part comprises a first layer constituting a tread surface, and a second layer adjacent to an inner side of the first layer in a tire radial direction, wherein each of the first layer and the second layer is composed of a rubber composition comprising a rubber component and a recovered carbon black, and wherein B/C is 1.0 or less, where a content of the recovered carbon black based on 100 parts by mass of a rubber component of a rubber composition constituting the first layer is referred to as C, in parts by mass, and a content of the recovered carbon black based on 100 parts by mass of a rubber component of a rubber composition constituting the second layer is referred to as B, in parts by mass.

A mechanism by which the tire of the present invention can improve in grip performance on an icy road during high-speed running is considered as follows, although the following consideration is not intended to be bound by any theory.

Due to influence of hydrocarbon and the like that are contained in a rubber product of raw material and the like, a recovered carbon black has more irregularities on its surface as compared with a normal carbon black, and it is considered that its surface activity is deteriorated. Accordingly, in the case where the rubber composition of the first layer constituting the tread part comprises a recovered carbon black, (1) irregularities of the recovered carbon black hitch even on a few irregularities of an icy road, and it is considered that a scratching effect can be obtained. Additionally, (2) as a reinforcing effect of a rubber component due to physical adsorption of a recovered carbon black can be obtained, it is considered that deformation caused by such a hitch can be easily transmitted to a rubber inner part. Moreover, due to a decrease in surface activity, (3) friction between a recovered carbon black and a rubber molecular chain occurs around the recovered carbon black, heat is generated around the recovered carbon black, and a ground contact becomes easy such that a domain centered in the recovered carbon black bites into an icy road surface. Moreover, in the case where the rubber composition constituting the second layer comprises a recovered carbon black, (4) friction between the recovered carbon black and a rubber molecular chain occurs even in the tread inner part due to force transmitted from a road surface through the tread surface, and heat is generated around the recovered carbon black, so that kinetic energy of a vehicle is converted into heat in the rubber inner part, and grip performance that is good even during high-speed running is obtained. Furthermore, in the case where B/C is 1.0 or less, (5) hear generation of the second layer that easily accumulates heat can be reduced more than that of the first layer, and a tire can be prevented from slipping due to ice on a road surface melted by an excessive heat accumulation by the second layer. From the above, with cooperation of the above-described (1) to (5), a scratching effect derived from a recovered carbon black is obtained on a surface of the tread part without excessively melting ice on a road surface, its deformation is transmitted to the tread inner part, and energy loss can be caused even in the tread inner part, so that it is considered that the tire of the present invention can improve in grip performance on an icy road during high-speed running.

70°CE*1/70°CE*2 is preferably 0.70 or less, where a complex elastic modulus at 70°C of the rubber composition constituting the first layer is referred to as 70°CE*1, in MPa, and a complex elastic modulus at 70°C of the rubber composition constituting the second layer is referred to as 70°CE*2, in MPa.

When the rubber composition constituting the first layer becomes softer than the rubber composition constituting the second layer, the first layer falls under a state where the first layer is pressed against the second layer when the tire contacts a road surface, so that it is considered grip performance by a domain centered in the recovered carbon black in the first layer is further improved.

A 100% modulus of the rubber composition constituting the second layer is preferably greater than a 100% modulus of the rubber composition constituting the first layer.

When the rubber composition constituting the first layer becomes softer than the rubber composition constituting the second layer, the first layer falls under a state where the first layer is pressed against the second layer when the tire contacts a road surface, so that it is considered grip performance by a domain centered in the recovered carbon black in the first layer is further improved.

When a thickness of the first layer is referred to as t1, in mm, and a thickness of the second layer is referred to as t2, in mm, a ratio (t1/(t1+t2)) of t1 to a sum of t1 and t2 is preferably 0.80 or less.

When a ratio of the thickness of the first layer is equal to or less than a certain value, the first layer accumulates heat during high-speed running, melting of ice on a road is suppressed, and slipping can be prevented, so that it is considered that grip performance on an icy road can be further improved.

When the thickness of the first layer is referred to as t1, in mm, and the thickness of the second layer is referred to as t2, in mm, a product (C×t1/(t1+t2)) of C, in parts by mass, and the ratio of t1 to the sum of t1 and t2 (t1/(t1+t2)) is preferably 20.0 or less.

When C×t1/(t1+t2) is within the above-described range, the first layer excessively accumulates heat during high-speed running, ice on a road is melted by the heat to generate a water film, and slipping of the tire can be prevented by the water film, so that it is considered that grip performance on an icy road can be further improved.

The tread part preferably comprises one or more circumferential grooves extending continuously in a tire circumferential direction, and a product (H×C) of a groove depth (H), in mm, of a deepest part of each of the circumferential grooves and C, in parts by mass, is preferably 200 or less.

The deeper the groove of the tread part is, the more easily a land part partitioned off by adjacent circumferential grooves and a land part partitioned off by a circumferential groove and a ground-contacting end part of the tread part deform, and it is considered that it becomes easy to generate heat. Accordingly, when the product of these values is equal to or less than a certain value, heat generation and heat accumulation by the first layer of the tread during running are suppressed, ice on a road is melted by the heat to generate a water film, and slipping of the tire can be prevented by the water film, so that it is considered that grip performance on an icy road can be further improved.

The tread part preferably comprises a groove inclined in a tire circumferential direction or in a tire width direction, and a ratio (L/C) of a maximum width L, in mm, of the groove inclined in the tire circumferential direction or in the tire width direction to C, in parts by mass, is preferably 0.30 or more.

When it comprises an inclined groove, air easily passes such that the air crosses the tire width direction during a rolling motion of the tire, and it is considered that a cooling effect on the tread surface can be obtained. Accordingly, when the groove width is sufficiently wide relative to the content C of the recovered carbon black of the first layer, a cooling efficiency is enhanced, and it is considered that heat accumulation in the first layer of the tread can be easily suppressed.

A tan δ at 70°C of the rubber composition constituting the second layer (70°C tan δ2) is preferably greater than 0.02 and less than 0.20.

When 70°C tan δ2 of the second layer is within the above-described range, heat generation of the second layer can be reduced, heat accumulation in the second layer can be suppressed, and it is considered that grip performance on an icy road during high-speed running is further improved.

A Shore hardness Hs of the rubber composition constituting the first layer is preferably greater than 55 and less than 80.

When the rubber hardness is within the above-described range, it is considered that grip performance on an icy road during high-speed running is further improved.

When a content of an isoprene-based rubber in the rubber component of the rubber composition constituting the first layer is referred to as I, in % by mass, a ratio of I to C (I/C) is preferably 1.20 or more.

When I/C is within the above-described range, dispersibility of the recovered carbon black in the rubber component in the first layer is improved, and it is considered that grip performance on an icy road during high-speed running is further improved.

The recovered carbon black is preferably a recovered carbon black resulting from firing of a waste tire and/or a waste tire tube.

When the recovered carbon black resulting from firing of a waste tire and/or a waste tire tube is used, it is considered that it becomes easy for the recovered carbon black to disperse in the rubber component of the rubber composition.

The waste tire and/or the waste tire tube preferably comprises a diene-based rubber.

When the waste tire and/or the waste tire tube comprises a diene-based rubber, it is considered that it becomes easy for the recovered carbon black to disperse in the rubber component of the rubber composition.

### <Definition>

A "tread part" is a part forming a ground-contacting surface of a tire and is a member located on the outer side in the tire radial direction with respect to members forming a tire skeleton with steel or a textile material, such as a belt layer, a belt reinforcement layer, a carcass layer, and the like, on a cross section in the tire radial direction when the tire comprises these members.

A "thickness of each of rubber layers of a tread part" refers to a thickness of each lubber layer on a tire equator on a cross section obtained by cutting the tire along a plane including a tire rotation axis and is an average value of thicknesses of the tread measured at five sites by rotating the tire in 72 degree increments in a tire circumferential direction. For example, a thickness of the first layer refers to a direct distance in the tire radial direction from the tread outermost surface to an interface on the inner side of the first layer in the tire radial direction on the tire equator. Besides, when circumferential grooves are provided on the tire equator, the thickness of each of the rubber layers constituting the tread part is defined as a thickness of each rubber layer in a central part of a land part nearest to tire equator in the tire width direction. A "land part nearest to a tire equator" refers to a land part having a groove edge of a circumferential groove present on the tire equator, the groove edge being nearest to the tire equator. When a plurality of such land parts are present, the thickness of respective rubber layers constituting the tread part is defined as an average value of thicknesses of respective rubber layers in the central parts of these two land parts in the tire width direction. Moreover, when an electrically conductive member or the like is present on a land part present on the tire equator, which makes an interface unclear, the measurement is performed after virtually joining together interfaces blocked by the electrically conductive member or the like.

A "maximum width of an inclined groove" refers to a maximum one among opening widths of grooves on an outermost surface of a tread on a cross section perpendicular to a center line of both ends of the tread running in a groove-extending direction. An opening width is defined as a direct distance from one end of the tread to the other end of the tread on the outermost surface of the tread. Here, the term "groove-extending direction" means a direction in which a groove extends continuously. For example, in a case where the groove is a circumferential groove, the groove-extending direction is a circumferential direction, and in a case where the groove is a groove inclined in a tire width direction, the groove-extending direction is a direction along an inclination in the tire width direction.

The term "recovered carbon black" refers to carbon black that is obtained by pulverizing a product comprising carbon black such as a used tire and firing the pulverized product, in which, when the product is subjected to oxidative combustion by heating in the air, using a thermal weight measurement method according to JIS K 6226-2:2003, a ratio of a mass of ash (ash content), which is a component that does not combust, is 13% by mass or more. That is, a mass (carbon amount) of a lost content due to the oxidative combustion is less than 87% by mass. The recovered carbon black is also referred to as a "recycle carbon black" and may be also expressed by rCB.

A "softening agent" is a material giving a rubber component plasticity and is a component extracted from a rubber composition using acetone. Examples of the softening agent includes a softening agent that is a liquid (in a liquid state) at 25°C, and a softening agent that is a solid at 25°C. However, the examples of the softening agent shall not include wax and stearic acid commonly used in the tire industry.

A "content of a softening agent" also comprises an amount of a softening agent contained in an extended rubber component previously extended with the softening agent such as oil, a resin component, a liquid rubber component, and the like. Moreover, the same applies to a content of oil, a content of a resin component, and a content of a liquid rubber, and for example, in a case where the extending component is oil, the extending oil is included in the content of oil.

### <Measuring method>

"70°C tan δ" is a loss tangent measured using a dynamic viscoelasticity measuring device (for example, EPLEXOR series manufactured by gabo Systemtechnik GmbH) under a condition of a temperature at 70°C, a frequency of 10 Hz, an initial strain of 5%, a dynamic strain of ±1%, and an extension mode. A sample for measurement of a loss tangent is a vulcanized rubber composition having a length of 20 mm, a width of 4 mm, and a thickness of 1 mm. In a case where the sample is prepared by being cut out of a tire, the sample is cut out of a tread part of the tire such that the tire circumferential direction becomes a long side and the tire radial direction becomes a thickness direction.

"70°CE*" is a complex elastic modulus measured using a dynamic viscoelasticity measuring device (for example, EPLEXOR series manufactured by gabo Systemtechnik GmbH) under a condition of a temperature at 70°C, a frequency of 10 Hz, an initial strain of 5%, a dynamic strain of ±1%, and an extension mode. A sample for measurement of 70°CE* is prepared in the same manner as in the case of 70°C tan δ.

A "styrene content" is a value calculated by ¹H-NMR measurement and is applied to a rubber component having a repeating unit derived from styrene such as, for example, a SBR and the like. A "cis content (cis-1,4-bond butadiene unit amount)" is a value calculated in accordance with JIS K 6239-2:2017 by an infrared absorption spectrometry and is applied to a rubber component having a repeating unit derived from butadiene such as, for example, a BR and the like.

A "Shore hardness" is a Shore hardness Hs is measured at 23°C in accordance with JIS K 6253 while pressing a type A durometer against a sample from the ground-contacting-surface side. In a case where a sample for measurement of hardness is prepared from a test tire, the sample is cut out of a tread part forming a ground-contacting surface of the test tire such that a tire radial direction becomes a thickness direction.

A "100% modulus" is a stress at 100% elongation, in MPa, that is measured when, after preparing a No 7. dumbbell-shaped test piece with a thickness of 1 mm, a tensile test is performed in accordance with JIS K 6251 "Rubber, vulcanized or thermoplastics-Determination of tensile stress-strain properties" in an atmosphere at 23°C under a condition of a tension rate of 3.3 mm/sec. In a case where a sample for measurement of 100% modulus is prepared from a test tire, the sample is cut out of a tread part forming a ground-contacting surface of the test tire such that a tire radial direction becomes a thickness direction.

A "weight-average molecular weight (Mw)" can be calculated in terms of a standard polystyrene based on measurement values obtained by a gel permeation chromatography (GPC) (for example, GPC-8000 Series manufactured by Tosoh Corporation, detector: differential refractometer, column: TSKGEL SUPERMULTIPORE HZ-M manufactured by Tosoh Corporation). For example, Mw is applied to SBR, BR, and the like.

A "nitrogen adsorption specific surface area (N₂SA) of carbon black" is measured according to JIS K 6217-2:2017. A "nitrogen adsorption specific surface area (N₂SA) of silica" is measured by a BET method according to ASTM D3037-93.

A procedure for producing a tire according to one embodiment of the present invention will be described below in detail. However, the following descriptions are illustrative for explaining the present invention and are not intended to limit the technical scope of the present invention to this description range only.

### [Tire]

A tire according to one embodiment of the present invention is described below with reference to the drawings. Besides, the embodiment described below is merely one example, and the tire of the present invention is not limited to the embodiment described below.

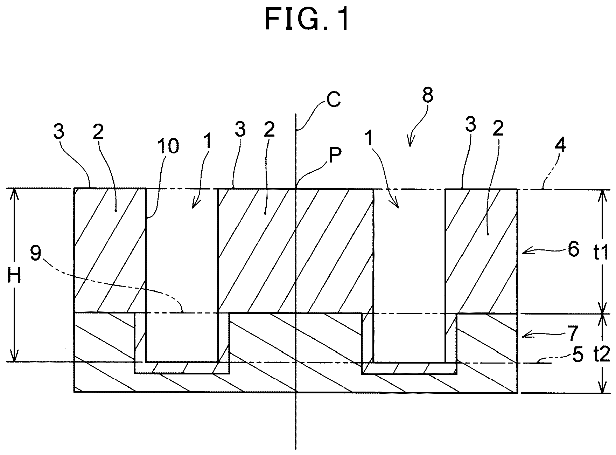

FIG. 1 is a view showing a cross section of a tread part of a tire passing through a tire rotation axis. In FIG, 1, a vertical direction is a tire radial direction, a horizontal direction is a tire width direction, and a direction perpendicular to a paper surface is a tire circumferential direction.

The tread of the tire according to the present embodiment preferably comprises a circumferential groove 1 extending in a tire circumferential direction. The circumferential groove 1 may extend linearly along the circumferential direction or may extend in a zigzag shape along the circumferential direction. It is not essential that the circumferential groove 1 is successive in the circumferential direction without interruption, and for example, the circumferential groove 1 may be interrupted by a lateral groove.

A groove depth H of the circumferential groove 1 is calculated by a distance between an extension line 4 connecting two land parts 2 adjacent to the circumferential groove 1 and an extension line 5 of a deepest part of a groove bottom of the circumferential groove 1. Besides, for example, in a case where a plurality of circumferential grooves 1 are used, the groove depth H can be a groove depth of a circumferential groove having a deepest groove depth.

As shown in the drawing, a tread part 8 of the tire according to the present embodiment comprises a first layer 6 and a second layer 7, an outer surface of the first layer 6 constituting a tread surface 3, and the second layer 7 being adjacent to an inner side of the first layer 6 in a radial direction. The first layer 6 typically corresponds to a cap tread. Since a typical shape of the second layer 7 has not been determined, the second layer 7 may be a cap tread or a base tread. Moreover, one or more rubber layers may be further provided between the second layer 7 and a belt layer as long as the object of the present invention can be achieved. In a case where the tread part 8 comprises three or more layers, the cap tread or an inner-side layer (base tread) may be composed of two or more layers. For example, in a case where the cap tread is composed of two layers, in the cap tread, a rubber layer present on the inner side in a tire radial direction corresponds to the second layer of the present invention, and in a case where the base tread is composed of two layers, in the base tread, a rubber layer present on the outer side in the tire radial direction corresponds to the second layer of the present invention.

Although, in FIG. 1, a deepest part of a groove bottom of a circumferential groove 1 having the deepest groove depth among a plurality of circumferential grooves 1 is formed to be located on the inner side in the tire radial direction with respect to an outermost part of the second layer 7 in a land part 2 adjacent to that circumferential groove 1, the present invention is not limited to such an aspect, the deepest part of the groove bottom of the circumferential groove 1 may stay within the first layer 6 in the land part 2 adjacent to that circumferential groove 1.

Although, in FIG. 1, a groove width of each of the circumferential grooves 1 is constant from the outer side toward the inner side in the tire radial direction, the present invention is not limited to such an aspect, and the groove width may be changed from the outer side toward the inner side in the tire radial direction. Moreover, although a groove wall 10 of each of the circumferential grooves extends linearly from the outer side toward the inner side in the tire radial direction, the present invention is not limited to such an aspect, and for example, the groove wall 10 may extend in a curved shape or a stepped shape.

In the present embodiment, the total thickness of the tread part, which is the sum of a thickness t1 of the first layer 6 and a thickness t2 of the second layer 7 (t1+t2) in FIG. 1, is preferably 6.0 mm or more, more preferably 7.0 mm or more, further preferably 8.0 mm or more, further preferably 9.0 mm or more, particularly preferably 9.5 mm or more, from the viewpoints of grip performance on an icy road and durability. Moreover, the total thickness of the tread part is preferably 15.0 mm or less, more preferably 13.0 mm or less, further preferably 11.0 mm or less, from the viewpoint of effects of the present invention.

In the present embodiment, the thickness t1 of the first layer 6 is preferably 4.0 mm or more, more preferably 5.0 mm or more, further preferably 6.0 mm or more, from the viewpoint that it becomes easy for a tread part to bite into an icy road surface due to heat generation by the first layer to improve grip performance on an icy road. Moreover, the thickness t1 of the first layer 6 is preferably 12.0 mm or less, more preferably 10.0 mm or less, further preferably 9.0 mm or less, particularly preferably 8.0 mm or less.

In the present embodiment, the thickness t2 of the second layer 7 is preferably 0.5 mm or more, more preferably 0.7 mm or more, further preferably 1.0 mm or more, from the viewpoint of securing heat generation of the second layer to improve grip performance on an icy road during high-speed running. Moreover, the thickness t2 of the second layer 7 is preferably 6.0 mm or less, more preferably 4.0 mm or less, further preferably 3.0 mm or less, particularly preferably 2.5 mm or less, from the viewpoint of suppressing heat generation during running.

A ratio of t1 to a sum of the thickness t1 of the first layer 6 and the thickness t2 of the second layer 7 (t1/(t1+t2)) is preferably 0.80 or less, more preferably 0.75 or less, further preferably 0.72 or less, from the viewpoint of making the ratio of the thickness of the first layer equal to or less than a certain value, accumulating heat by the first layer during high-speed running, suppressing melting of ice on a road, and preventing slipping to improve grip performance on an icy road. Moreover, t1/(t1+t2) is preferably 0.50 or more, more preferably 0.55 or more, further preferably 0.65 or more, from the viewpoint of enabling the first layer to deform moderately.

A 70°C tan δ of the first layer 6 (70°C tan δ1) is preferably 0.21 or less, more preferably 0.20 or less, further preferably 0.19 or less, from the viewpoint of suppressing an excessive heat generation caused by the tread part even during high-speed running to prevent slipping. Moreover, a lower limit value of the 70°C tan δ1 is preferably 0.02 or more, more preferably 0.04 or more, further preferably 0.06 or more.

A 70°C tan δ of the second layer 7 (70°C tan δ2) is preferably less than 0.20, more preferably 0.19 or less, from the viewpoint of suppressing an excessive heat generation in the tread inner part. Moreover, although its lower limit is not particularly limited, 70°C tan δ2 is preferably greater than 0.02, more preferably greater than 0.03, further preferably greater than 0.04.

A complex elastic modulus, in MPa, at 70°C of the first layer 6 (70°CE*1) is preferably 8.0 MPa or less, more preferably 6.0 MPa or less, further preferably 5.0 MPa or less, particularly preferably 4.5 MPa or less, from the viewpoint of grip performance on an icy road. Moreover, the 70°CE*1 is preferably 3.0 MPa or more, more preferably 3.5 MPa or more, further preferably 4.0 MPa or more, from the viewpoint of suppressing an excessive heat generation caused by the first layer to prevent slipping.

70°CE*2 of the second layer 7 is preferably greater than 70°CE* of the first layer 6. That is, a ratio of 70°CE*1 of the first layer 6 to 70°CE*2 of the second layer 7 (70°CE*1/70°CE*2) is preferably less than 1.00. Specifically, 70°CE*2 of the second layer 7 is preferably 9.0 MPa or less, more preferably 8.0 MPa or less, further preferably 7.0 MPa or less, particularly preferably 6.5 or less. Moreover, 70°CE*2 is preferably 3.0 MPa or more, more preferably 4.0 MPa or more, further preferably 4.5 MPa or more.

70°CE*1/70°CE*2 is preferably less than 1.00, more preferably 0.80 or less, further preferably 0.70 or less, particularly 0.65 or less. Moreover, a lower limit value of 70°CE*1/70°CE*2 is preferably 0.40 or more, more preferably 0.50 or more, further preferably 0.55 or more.

The 70°C tan δ and 70°CE* can be appropriately adjusted depending on types or compounding amounts of a rubber component, a filler, a softening agent, a vulcanizing agent, a vulcanization accelerator, and the like. For example, a value of 70°C tan δ tends to be increased by increasing a total styrene amount in a rubber component, increasing a compounding amount of a filler, decreasing an amount of a vulcanizing agent or a vulcanization accelerator, using a resin having a high glass transition temperature or the like, as a softening agent, and the like. Moreover, for example, a value of 70°CE* tends to be increased by increasing a total styrene amount in a rubber component, increasing a compounding amount of a filler, increasing an amount of a vulcanizing agent or a vulcanization accelerator, using a resin having a high glass transition temperature or the like, as a softening agent, decreasing a compounding amount of a softening agent, and the like. Moreover, values of 70°C tan δ and 70°CE* tend to be decreased when a compounding amount of a recovered carbon black is decreased.

A Shore hardness Hs of a rubber composition constituting the first layer 6 is preferably 50.0 or more, more preferably 55.0 or more, further preferably 60.0 or more, particularly preferably 61.5 or more, from the viewpoint of grip performance on an icy road. Moreover, the rubber hardness is preferably 80.0 or less, more preferably 75.0 or less, further preferably 70.0 or less, from the viewpoint of grip performance on an icy road during high-speed running.

A Shore hardness Hs of a rubber composition constituting the second layer 7 is preferably 55.0 or more, more preferably 60.0 or more, further preferably 62.0 or more, particularly preferably 63.5 or more, from the viewpoint of grip performance on an icy road. Moreover, the rubber hardness is preferably 80.0 or less, more preferably 70.0 or less, further preferably 65.0 or less, from the viewpoint of grip performance on an icy road during high-speed running.

Besides, the Shore hardness of each of the rubber layers can be appropriately adjusted depending on types or compounding amounts of a rubber component, a filler, a softening agent, and the like. For example, the Shore hardness can be increased by increasing a total styrene amount in a rubber component, increasing a compounding amount of a filler, increasing an amount of a vulcanizing agent or a vulcanization accelerator, using a resin having a high glass transition temperature or the like, as a softening agent, decreasing a compounding amount of a softening agent, and the like. Conversely, the Shore hardness can be decreased by decreasing a total styrene amount in a rubber component, decreasing a compounding amount of a filler, decreasing an amount of a vulcanizing agent or a vulcanization accelerator, using a plasticizing agent having a low glass transition temperature, as a softening agent, increasing a compounding amount of a softening agent, and the like.

A 100% modulus of the rubber composition constituting the first layer 6 is preferably less than a 100% modulus of the rubber composition constituting the second layer 7. By doing so, the first layer falls under a state where the first layer is pressed against the second layer when the tire contacts a road surface, so that it is considered that grip performance by a domain centered in the recovered carbon black in the first layer is further improved. The 100% modulus of the rubber composition constituting the first layer 6 is preferably 1.0 MPa or more, more preferably 1.1 MPa or more, further preferably 1.2 MPa or more, particularly preferably 1.3 MPa or more. Moreover, the 100% modulus is preferably 3.0 MPa or less, more preferably 2.5 MPa or less, further preferably 2.3 MPa or less.

The 100% modulus of the rubber composition constituting the second layer 7 is preferably 1.0 MPa or more, more preferably 1.5 MPa or more, further preferably 2.0 MPa or more. Moreover, the 100% modulus is preferably 5.5 MPa or less, more preferably 5.0 MPa or less, further preferably 4.5 MPa or less, particularly preferably 4.0 MPa or less.

Besides, 100% modulus can be appropriately adjusted depending on types or compounding amounts of a filler, a plasticizing agent, a vulcanizing agent, a vulcanization accelerator, and the like. For example, 100% modulus of a rubber composition can be increased by increasing a total styrene amount in a rubber component, increasing a compounding amount of a filler, increasing an amount of a vulcanizing agent or a vulcanization accelerator, using a resin having a high glass transition temperature or the like, as a softening agent, decreasing a compounding amount of a softening agent, or the like.

A groove depth H of the circumferential groove is preferably 5.0 mm or more, more preferably 6.0 mm or more, further preferably 6.5 mm or more, further preferably 7.0 mm or more, further preferably 7.5 mm or more, particularly preferably 8.0 mm or more, from the viewpoint of grip performance on an icy road. Moreover, the groove depth H of the circumferential groove is preferably 12.0 mm or less, more preferably 11.0 mm or less, further preferably 10.0 mm or less, from the viewpoint of durability.

A ratio t1/H of a thickness t1, in mm, of the first layer 6 to the groove depth H, in mm, of the circumferential groove is preferably less than 1.00, more preferably less than 0.90, further preferably less than 0.88, from the viewpoint of effects of the present invention. Moreover, t1/H is preferably greater than 0.30, more preferably greater than 0.40, further preferably greater than 0.45.

The tread part 8 according to the present embodiment preferably comprises a groove inclined in the tire circumferential direction or in the tire width direction (inclined groove). Specifically, the groove inclined in the tire circumferential direction or in the tire width direction (inclined groove) is a lateral groove extending in the tire width direction, and this lateral groove extends with the lateral groove being bent or curved in a process of progress of the lateral groove in the tire width direction. A width of the lateral groove is, but not particularly limited to, usually 8 mm or less. Among such lateral grooves, a lateral groove having a width of 2 mm or less is particularly referred to as a sipe.

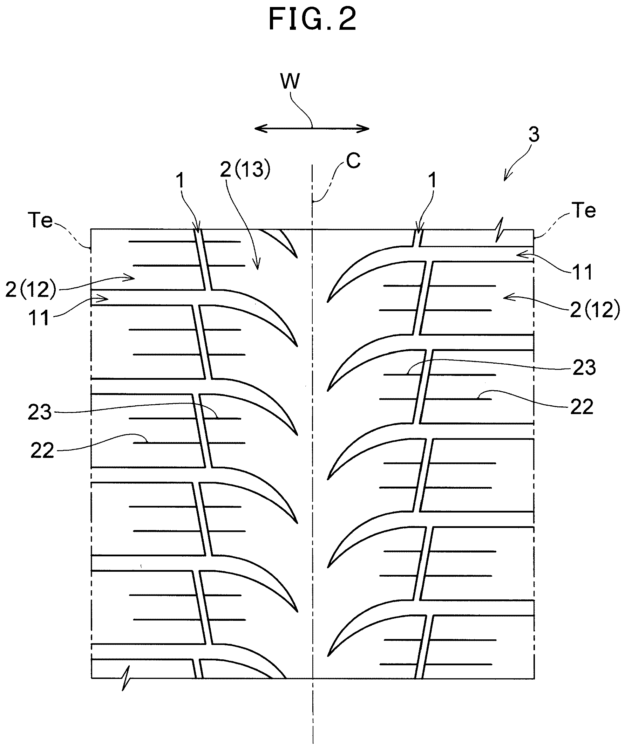

FIG. 2 shows a schematic view of a ground-contacting surface when the tread part of the tire according to one embodiment of the present invention is pressed against a flat surface. In FIG. 2, the tread surface 3 comprises a plurality of zigzag-shaped circumferential grooves 1 extending continuously in the circumferential direction. A lateral groove 11 is curved such that it shifts toward one side of the tire circumferential direction as it moves toward a tire equator C. In FIG. 2, the lateral groove 11 extends while crossing a circumferential groove 1 at a bending portion of the circumferential groove 1. Moreover, in FIG.2, each of shoulder land parts 12 is provided with a plurality of linear shoulder sipes 22 each having one end opened to a circumferential groove 1, and a center land part 13 is provided with a plurality of linear center sipes 23 each having one end opened to a circumferential groove 1.

A maximum width L of the groove inclined in the tire circumferential direction or in the tire width direction (inclined groove) is preferably 3.0 mm or more, more preferably 4.0 mm or more, further preferably 5. 0 mm or more, from the viewpoint of cooling the first layer to suppress heat accumulation. On the other hand, an upper limit value of L is preferably 15.0 mm or less, more preferably 10.0 mm or less, further preferably 8.0 or less.

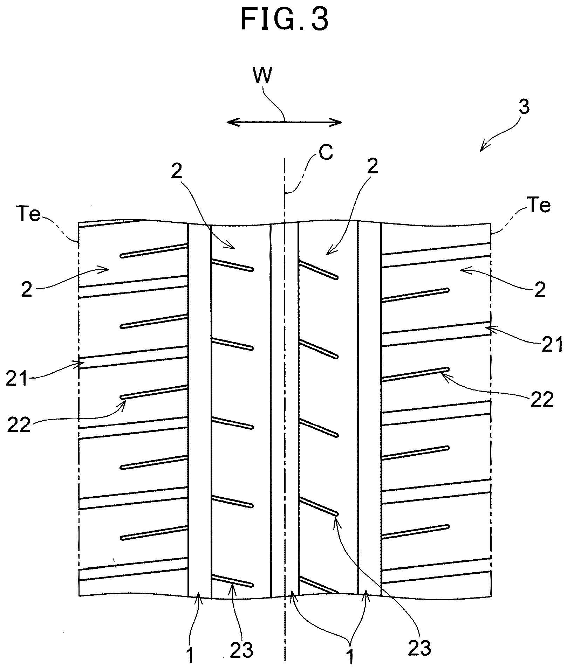

FIG. 3 shows a schematic view of a ground-contacting surface when the tread part of the tire according to another embodiment of the present invention is pressed against a flat surface. In FIG. 3, the tread surface comprises circumferential grooves 1 continuously extending linearly relative to the tire equator C, and lateral grooves 21 and sipes 22 and 23 that extend in the width direction. The tread part of the tire of the embodiment shown in FIG. 3 does not comprise any lateral grooves extending with the lateral grooves being bent or curved, that is, does not comprise any inclined grooves.

### [Rubber composition]

All the rubber compositions constituting the respective layers of the tread part according to the present embodiment can be produced using raw materials described below depending on required 100% modulus, Shore hardness, 70°C tan δ, 70°CE*, and the like. which will be described below in detail. Besides, unless otherwise noted, types and compounding amounts of various compounding agents illustrated are common to the rubber compositions constituting the first layer and the second layer of the tread part.

### <Rubber component>

Each rubber composition according to the present embodiment preferably comprises, as a rubber component, at least one selected from the group consisting of an isoprene-based rubber, a styrene-butadiene rubber (SBR), and a butadiene rubber (BR). The rubber composition constituting the first layer preferably comprises a BR as a rubber component, more preferably comprises a BR and an isoprene-based rubber, and may be a rubber component consisting of a BR and an isoprene-based rubber. The rubber composition constituting the second layer preferably comprises an isoprene-based rubber as a rubber component, more preferably comprises an isoprene-based rubber and a BR, and may be a rubber component consisting of an isoprene-based rubber and a BR. Moreover, extended rubbers previously extended with a plasticizing agent component may be used as these rubber components. Moreover, these rubber components may be modified with a functional group that can interact with a filler component such as silica, carbon black, and the like, and hydrogeneration treatment may be performed on a part of an unsaturated bond to form a saturated bond, from the viewpoints of optimization of a cross-linking form and suppression of deterioration.

### (Isoprene-based rubber)

As an isoprene-based rubber, for example, those common in the tire industry can be used, such as an isoprene rubber (IR), a natural rubber, and the like. Examples of the natural rubber include not only a non-modified natural rubber (NR) but also a modified natural rubber such as an epoxidized natural rubber (ENR), a hydrogenated natural rubber (HNR), a deproteinized natural rubber (DPNR), an ultra pure natural rubber, a grafted natural rubber, and the like. These isoprene-based rubbers may be used alone, or two or more thereof may be used in combination.

The NR is not particularly limited, and those common in the tire industry can be used, examples of which include, for example, SIR20, RSS#3, TSR20, and the like.

A content I of the isoprene-based rubber in the rubber component of the rubber composition constituting the first layer is preferably 20% by mass or more, more preferably 30% by mass or more, further preferably 35% by mass or more, particularly preferably 40% by mass or more, from the viewpoint of effects of the present invention. Moreover, an upper limit value of the content is, but not particularly limited to, preferably 80% by mass or less, more preferably 70% by mass or less, further preferably 60% by mass or less, particularly preferably 55% by mass or less.

A content of the isoprene-based rubber in the rubber component of the rubber composition constituting the second layer is preferably 20% by mass or more, more preferably 30% by mass or more, further preferably 35% by mass or more, particularly preferably 40% by mass or more, from the viewpoint of effects of the present invention. Moreover, an upper limit value of the content is, but not particularly limited to, preferably 80% by mass or less, more preferably 70% by mass or less, further preferably 60% by mass or less, particularly preferably 55% by mass or less.

### (BR)

The BR is not particularly limited, and those common in the tire industry can be used, such as, for example, a BR having a cis content less than 50 mol% (a low cis BR), a BR having a cis content of 90 mol% or more (a high cis BR), a rare-earth-based butadiene rubber synthesized using a rare-earth element-based catalyst (a rare-earth-based BR), a BR containing a syndiotactic polybutadiene crystal (a SPB-containing BR), a modified BR (a high cis modified BR, a low cis modified BR), and the like. These BRs may be used alone, or two or more thereof may be used in combination.

As the high cis BR, for example, those commercially available form Zeon Corporation, Ube Industries, Ltd., JSR Corporation, etc. can be used. When the rubber composition comprises a high cis BR, a low temperature property and abrasion resistance can be improved. The cis content is preferably 95 mol% or more, more preferably 96 mol% or more, further preferably 97 mol% or more. Besides, the cis content of the BR is measured by the above-described measuring method.

As the modified BR, a modified butadiene rubber (modified BR) is appropriately used whose terminal and/or main chain are modified with a functional group including at least one element selected from the group consisting of silicon, nitrogen, and oxygen.

Examples of other modified BRs include those obtained by adding a tin compound after polymerizing 1,3-butadiene by a lithium initiator, the terminal of the modified BR molecule being further bonded by tin-carbon bond (tin-modified BRs), and the like. Moreover, the modified BR may be either non-hydrogenated or hydrogenated.

A weight-average molecular weight (Mw) of the BR is preferably 300,000 or more, more preferably 350,000 or more, further preferably 400,000 or more, from the viewpoint of abrasion resistance. Moreover, it is preferably 2,000,000 or less, more preferably 1,000,000 or less, from the viewpoint of cross-linking uniformity. Besides, the weight-average molecular weight of the BR is measured by the above-described measuring method.

A content of the BR in the rubber component of the rubber composition constituting the first layer (a total content of all of two or more types of BRs when used in combination) is preferably 30% by mass or more, more preferably 40% by mass or more, further preferably 45% by mass or more, particularly preferably 50% by mass or more. On the other hand, the content of the BR in the rubber component of the rubber composition constituting the first layer is preferably 90% by mass or less, more preferably 80% by mass or less, further preferably 70% by mass or less, particularly preferably 65% by mass or less.

A content of the BR in the rubber component of the rubber composition constituting the second layer (a total content of all of two or more types of BRs when used in combination) is preferably 30% by mass or more, more preferably 40% by mass or more, further preferably 45% by mass or more, particularly preferably 50% by mass or more. On the other hand, the content of the BR in the rubber component of the rubber composition constituting the second layer is preferably 90% by mass or less, more preferably 80% by mass or less, further preferably 70% by mass or less, particularly preferably 65% by mass or less.

### (SBR)

The SBR is not particularly limited, examples of which include a non-modified solution-polymerized SBR (S-SBR), a non-modified emulsion-polymerized SBR (E-SBR), modified SBRs thereof (a modified S-SBR, a modified E-SBR), and the like. Examples of the modified SBR include a SBR modified at its terminal and/or main chain, a modified SBR coupled with tin, a silicon compound, etc. (a modified SBR of condensate or having a branched structure, etc.), and the like. Among them, a S-SBR and a modified SBR are preferable. Furthermore, hydrogenated ones of these SBRs (hydrogenated SBRs) and the like can also be used. These SBRs may be used alone, or two or more thereof may be used in combination.

The SBRs listed above may be used alone, or two or more thereof may be used in combination. As the SBRs listed above, for example, those commercially available from Sumitomo Chemical Co., JSR Corporation, Ltd., Asahi Kasei Corporation, Zeon Corporation, ZS Elastomer Co., Ltd., etc. can be used.

A content of the SBR in each of the rubber components constituting the first layer and the second layer can be, but not particularly limited to, for example, 5.0% by mass or more, 10% by mass or more, or the like.

### (Other rubber components)

As the rubber component according to the present embodiment, the rubber composition may comprise a rubber component other than the above-described isoprene-based rubber, BR, and SBR. As another rubber component, a cross-linkable rubber component commonly used in the tire industry can be used, examples of which include a diene-based rubber other than the isoprene-based rubber, the SBR, and the BR, such as a styrene-isoprene rubber (SIR), a styrene-isoprene-butadiene rubber (SIBR), a chloroprene rubber (CR), an acrylonitrile-butadiene rubber (NBR), and the like; and a non-diene-based rubber, such as a butyl rubber (IIR), a halogenated butyl rubber, an ethylene propylene rubber, a polynorbornene rubber, a silicone rubber, a polyethylene chloride rubber, a fluororubber (FKM), an acrylic rubber (ACM), a hydrin rubber, and the like. These other rubber components may be used alone, or two or more thereof may be used in combination. The rubber component according to the present embodiment comprises preferably 80% by mass or more, more preferably 90% by mass or more, further preferably 95% by mass or more, particularly preferably 98% by mass or more of a diene-based rubber or may be a rubber component consisting of a diene-based rubber. Moreover, besides the above-described rubber components, it may or may not comprise a known thermoplastic elastomer.

### <Filler>

Each of the rubber compositions according to the present embodiment comprises a recovered carbon as a filler, and the recovered carbon black is preferably used in combination with a carbon black and/or silica.

### (Recovered carbon black)

A recovered carbon black can be obtained by pulverizing a used pneumatic tire (waste tire) or a used tire tube (waste tire tube) and firing the pulverized product. These waste tire and waste tire tube each preferably comprises a diene-based rubber. For example, EP 3427975 A refers to "Rubber Chemistry and Technology", vol. 85, No. 3, pp.408-449 (2012), particularly, pages 438, 440, and 442 and describes that a recovered carbon black can be obtained by pyrolysis of an organic material at 550 to 580°C under an environment in which oxygen is eliminated or by vacuum pyrolysis at a relatively low temperature ([0027]). As described in [0004] of JP 6856781 B, such carbon black obtained by the pyrolysis processes usually lacks a functional group on its surface (A Comparison of Surface Morphology and Chemistry of Pyrolytic Carbon Blacks with Commercial Carbon Blacks, Powder Technology 160 (2005) 190-193).

An ash content of the recovered carbon black of the present invention is 13% by mass or more. The recovered carbon black has much ash content and thus is characterized in that it is less likely to absorb oil. The ash content is preferably 14% by mass or more, more preferably 15% by mass or more, further preferably 16% by mass or more, particularly preferably 17% by mass or more. Besides, a definition of the ash content is as described above.

The recovered carbon black may be one that lacks a functional group on its surface or may be one treated so as to include a functional group on its surface. A process for treating the recovered carbon black so that the recovered carbon black includes a functional group on its surface can be implemented by a usual method. For example, in EP 3173251 A, carbon black obtained from a pyrolysis process is treated with potassium permanganate under an acidic condition, thereby obtaining carbon black including a hydroxyl group and/or a carboxyl group on its surface. Moreover, in JP 6856781 B, carbon black obtained from a pyrolysis process is treated with an amino acid compound including at least one thiol group or disulfide group, thereby obtaining carbon black whose surface is activated. Examples of the recovered carbon black according to the present embodiment also include carbon black treated so as to include a functional group on its surface.

As the recycled carbon black, those commercially available from Strebl Green Carbon Pte Ltd., LDC Co., Ltd., etc. can be used.

A content C of the recovered carbon black based on 100 parts by mass of the rubber component of the rubber composition constituting the first layer is preferably 7.0 parts by mass or more, more preferably 9.0 parts by mass or more, further preferably 10.0 parts by mass or more, further preferably 15.0 parts by mass or more, further preferably 20.0 parts by mass, particularly preferably 25 parts by mass or more. Moreover, it is preferably 80 parts by mass or less, more preferably 70 parts by mass or less, further preferably 60 parts by mass or less, particularly preferably 50 parts by mass or less, from the viewpoint of reinforcing property.

In the present invention, a content B of the recovered carbon black based on 100 parts by mass of the rubber component of the rubber composition constituting the second layer is less than the content C of the recovered carbon black based on 100 parts by mass of the rubber component of the rubber composition constituting the first layer. That is, B/C is 1.0 or less. When B/C is 1.0 or less, hear generation of the second layer can be reduced more than that of the first layer, a tire can be prevented from slipping due to ice on a road surface melted by an excessive heat accumulation by the second layer, and it is considered that grip performance on an icy road during high-speed running is improved.

The content B of the recovered carbon black based on 100 parts by mass of the rubber component of the rubber composition constituting the second layer is, specifically, preferably 3.0 parts by mass or more, more preferably 5.0 parts by mass or more, further preferably 7.0 parts by mass or more. Moreover, it is preferably 50 parts by mass or less, more preferably 40 parts by mass or less, further preferably 30 parts by mass or less, particularly preferably 25 parts by mass or less, from the viewpoint of reinforcing property.

B/C is 1.00 or less, preferably 0.90 or less, more preferably 0.80 or less, further preferably 0.75 or less, particularly preferably 0.60 or less. On the other hand, a lower limit value of B/C is preferably greater than 0.10, more preferably greater than 0.20, further preferably greater than 0.30.

A product (C×(t1/t1+t2)) of C, in part by mass, and the ratio of t1 to the sum of the thickness t1 of the first layer and the thickness t2 of the second layer (t1/t1+t2) is preferably 20.0 or less, more preferably 15.0 or less, further preferably 10.0 or less, further preferably 9.0 or less, particularly preferably 7.0 or less. Moreover, a lower limit value of C×(t1/t1+t2) is preferably 1.0 or more, more preferably 1.5 or more, further preferably 2.0 or more. When C×t1/(t1+t2) is within the above-described ranges, the first layer excessively accumulates heat during high-speed running, ice on a road is melted by the heat to generate a water film, and slipping of the tire can be prevented by the water film, so that it is considered that grip performance on an icy road can be further improved.

A ratio (I/C) of a content I, in %by mass, of an isoprene-based rubber in the rubber component of the first layer to C, in parts by mass, is preferably 1.0 or more, more preferably 1.20 or more, further preferably 2.0 or more, further preferably 3.0 or more. On the other hand, an upper limit value of I/C is preferably 15.0 or less, more preferably 12.0 or less, further preferably 10.0 or less. When I/C is within the above-described ranges, dispersibility of the recovered carbon black in the rubber component in the first layer is improved, and it is considered that grip performance on an icy road during high-speed running is further improved.

A product (H×C) of a groove depth H, in mm, of a deepest part of the circumferential groove and C is preferably 200 or less, more preferably 150 or less, further preferably 100 or less. On the other hand, a lower limit value of H×C is preferably 20 or more, more preferably 50 or more, further preferably 60 or more.

A ratio (L/C) of a maximum width L, in mm, of the groove inclined in the tire circumferential direction or in the tire width direction to C, in parts by mass, is preferably 0.25 or more, more preferably 0.3 or more, further preferably 0.5 or more. On the other hand, an upper limit value of L/C is preferably 2.0 or less, more preferably 1.8 or less, further preferably 1.2 or less.

### (Carbon black other than rCB)

Carbon black other than rCB is not particularly limited, and those common in the tire industry can be used, such as, for example, GPF, FEF, HAF, ISAF, SAF, and the like. Besides, in addition to carbon black generated by burning a general mineral oil, carbon black, for which a biomass material such as lignin and the like is used, may be used. These carbon black may be used alone, or two or more thereof may be used in combination.

A nitrogen adsorption specific surface area (N₂SA) of carbon black is preferably 10 m²/g or more, more preferably 30 m²/g or more, further preferably 50 m²/g or more, from the viewpoint of reinforcing property. Moreover, it is preferably 200 m²/g or less, more preferably 150 m²/g or less, further preferably 120 m²/g or less, from the viewpoints of fuel efficiency and processability. Besides, the N₂SA of the carbon black is measured by the above-described measuring method.

A content of carbon black other than rCB based on 100 parts by mass of the rubber component of the rubber composition constituting the first layer is preferably 3.0 parts by mass or more, more preferably 5.0 parts by mass or more, further preferably 6.0 parts by mass or more, from the viewpoint of reinforcing property. Moreover, it is preferably 40 parts by mass or less, more preferably 30 parts by mass or less, further preferably 20 parts by mass or less, particularly preferably 15 parts by mass or less, from the viewpoint of effects of the present invention.

A content of carbon black other than rCB based on 100 parts by mass of the rubber component of the rubber composition constituting the second layer is preferably 30 parts by mass or more, more preferably 40 parts by mass or more, further preferably 50 parts by mass or more, from the viewpoint of heat generation. Moreover, the content is preferably 120 parts by mass or less, more preferably 100 parts by mass or less, further preferably 80 parts by mass or less, particularly preferably 70 parts by mass.

A total content of carbon black (a total of the content of rCB and the content of carbon black other than rCB) based on 100 parts by mass of the rubber component of the rubber composition constituting the first layer is preferably 10 parts by mass or more, more preferably 15 parts by mass or more, further preferably 20 parts by mass or more, from the viewpoint of reinforcing property. Moreover, the total content of carbon black is preferably 100 parts by mass or less, more preferably 80 parts by mass or less, further preferably 60 parts by mass or less, particularly preferably 50 parts by mass or less, from the viewpoint of effects of the present invention.

A total content of carbon black (a total of the content of rCB and the content of carbon black other than rCB) based on 100 parts by mass of the rubber component of the rubber composition constituting the second layer is preferably 10 parts by mass or more, more preferably 15 parts by mass or more, further preferably 20 parts by mass or more, from the viewpoint of reinforcing property. Moreover, the total content of carbon black is preferably 90 parts by mass or less, more preferably 85 parts by mass or less, further preferably 80 parts by mass or less, particularly preferably 75 parts by mass or less, from the viewpoint of effects of the present invention.

A ratio of the content of the rCB to the total content of carbon black based on 100 parts by mass of the rubber component of the rubber composition constituting the first layer (C/ the total content of carbon black) is preferably 0.40 or more, more preferably 0.50 or more, further preferably 0.60 or more. A ratio of the content of the rCB to the total content of carbon black based on 100 parts by mass of the rubber component of the rubber composition constituting the second layer (B/ the total content of carbon black) is preferably 0.12 or more, more preferably 0.20 or more, further preferably 0.33 or more.

### (Silica)

Silica is not particularly limited, and those common in the tire industry can be used, such as, for example, silica prepared by a dry process (anhydrous silica), silica prepared by a wet process (hydrous silica), and the like. Among them, hydrous silica prepared by a wet process is preferable for the reason that it has many silanol groups. Besides, in addition to the above-described silica, silica made from a biomass material such as rice husks and the like may be appropriately used. These silica may be used alone, or two or more thereof may be used in combination.

A nitrogen adsorption specific surface area (N₂SA) of silica is preferably 120 m²/g or more, more preferably 150 m²/g or more, further preferably 170 m²/g or more, from the viewpoints of fuel efficiency and abrasion resistance. Moreover, it is preferably 350 m²/g or less, more preferably 300 m²/g or less, further preferably 250 m²/g or less, from the viewpoints of fuel efficiency and processability. Besides, the N₂SA of silica is measured by the above-described measuring method.

A content of the silica based on 100 parts by mass of the rubber component of the rubber composition constituting the first layer is preferably 40 parts by mass or more, more preferably 45 parts by mass or more, further preferably 50 parts by mass or more, particularly preferably 15 parts by mass or more, from the viewpoint of reinforcing property. Moreover, it is preferably 100 parts by mass or less, more preferably 90 parts by mass or less, further preferably 80 parts by mass or less, particularly preferably 70 parts by mass or less, from the viewpoint of processability.

A content of the silica based on 100 parts by mass of the rubber component of the rubber composition constituting the second layer may be, but not particularly limited to, 0 parts by mass. It is preferably 10 parts by mass or more, more preferably 15 parts by mass or more, further preferably 30 parts by mass or more, from the viewpoint of reinforcing property. Moreover, it is preferably 100 parts by mass or less, more preferably 90 parts by mass or less, further preferably 80 parts by mass or less, particularly preferably 70 parts by mass or less, from the viewpoint of processability.

A total content of carbon black (the rCB and carbon black other than the rCB) and the silica based on 100 parts by mass of the rubber component of the rubber composition constituting the first layer is preferably 50 parts by mass or more, more preferably 60 parts by mass or more, further preferably 70 parts by mass or more. A total content of carbon black (the rCB and carbon black other than the rCB) and the silica based on 100 parts by mass of the rubber component of the rubber composition constituting the second layer is preferably 40 parts by mass or more, more preferably 50 parts by mass or more, further preferably 60 parts by mass or more. Moreover, an upper limit value of each of the total contents of carbon black and the silica of the rubber compositions constituting the first layer and the second layer is preferably 200 parts by mass or less, more preferably 150 parts by mass or less, further preferably 100 parts by mass or less, from the viewpoint of processability.

### (Other fillers)

Fillers other than the recovered carbon black, carbon black other than the rCB, and silica are not particularly limited, and those conventionally and commonly used in the tire industry can be compounded, such as, for example, aluminum hydroxide, alumina (aluminum oxide), calcium carbonate, magnesium sulfate, talc, clay, biochar, and the like. These other fillers may be used alone, or two or more thereof may be used in combination.

### (Silane coupling agent)

Silica is preferably used in combination with a silane coupling agent. The silane coupling agent is not particularly limited, and any silane coupling agent conventionally used in combination with silica in the tire industry can be used, such as, for example, mercapto-based silane coupling agents such as 3-mercaptopropyltrimethoxysilane, 3-mercaptopropyltriethoxysilane, 2-mercaptoethyltrimethoxysilane, 2-mercaptoethyltriethoxysilane, and the like; sulfide-based silane coupling agents such as bis(3-triethoxysilylpropyl)disulfide, bis(3-triethoxysilylpropyl)tetrasulfide, and the like; thioester-based silane coupling agents such as 3-octanoylthio-1-propyltriethoxysilane, 3-hexanoylthio-1-propyltriethoxysilane, 3-octanoylthio-1-propyltrimethoxysilane, and the like; vinyl-based silane coupling agents such as vinyltriethoxysilane, vinyltrimethoxysilane, and the like; amino-based silane coupling agents such as 3-aminopropyltriethoxysilane, 3-aminopropyltrimethoxysilane, 3-(2-aminoethyl)aminopropyltriethoxysilane, and the like; glycidoxy-based silane coupling agents such as γ-glycidoxypropyltriethoxysilane, γ-glycidoxypropyltrimethoxysilane, and the like; nitro-based silane coupling agents such as 3-nitropropyltrimethoxysilane, 3-nitropropyltriethoxysilane, and the like; chloro-based silane coupling agents such as 3-chloropropyltrimethoxysilane, 3-chloropropyltriethoxysilane, and the like; and the like. Among them, a sulfide-based silane coupling agent and/or a mercapto-based silane coupling agent are preferably compounded in the rubber composition. As the silane coupling agent, for example, those commercially available from Momentive Performance Materials, etc. can be used. These silane coupling agents may be used alone, or two or more thereof may be used in combination.

A content of the silane coupling agent based on 100 parts by mass of silica preferably 1.0 parts by mass or more, more preferably 3.0 parts by mass or more, further preferably 5.0 parts by mass or more, from the viewpoint of enhancing dispersibility of silica. Moreover, it is preferably 20 parts by mass or less, more preferably 15 parts by mass or less, further preferably 12 parts by mass or less, from the viewpoints of cost and processability.

### <Other compounding agents>

Each rubber composition according to the present embodiment can appropriately comprise compounding agents conventionally and commonly used in the tire industry, such as, for example, a softening agent, wax, processing aid, stearic acid, zinc oxide, an antioxidant, a vulcanizing agent, a vulcanization accelerator, and the like, in addition to the above-described components.

### (Softening agent)

Each rubber composition according to the present embodiment preferably comprises a softening agent. Examples of the softening agent include, for example, a resin component, oil, a liquid rubber, and the like. Besides, each of these softening agents also comprises an extending component in using the above-described extended rubber.

Examples of the resin component include, but not particularly limited to, hydrocarbon resins, such as a petroleum resin, a terpene-based resin, a rosin-based resin, a phenol-based resin, and the like, which are commonly used in the tire industry.

A content of the resin component when compounded based on 100 parts by mass of the rubber component is preferably 2 parts by mass or more, more preferably 5 parts by mass or more, further preferably 10 parts by mass or more. Moreover, the content of the resin component is preferably 100 parts by mass or less, more preferably 80 parts by mass or less, further preferably 50 parts by mass or less, particularly preferably 40 parts by mass or less.

Examples of the oil include, for example, paraffinic process oils, naphthenic process oils, aromatic process oils, and the like. Moreover, as an environmental measure, process oils each having a low content of a polycyclic aromatic compound (PCA) can also be used. Examples of the process oils each having a low content of a PCA include mild extraction solvates (MES), treated distillate aromatic extracts (TDAE), heavy naphthenic oil, and the like. Moreover, from the viewpoint of a life cycle assessment, one obtained by refining a waste oil after use for a rubber mixing machine or an engine or waste cooking oil used in a cooking facility may be used.

A content of the oil when compounded based on 100 parts by mass of the rubber component is preferably 1 part by mass or more, more preferably 3 parts by mass or more, further preferably 5 parts by mass or more. Moreover, the content is preferably 50 parts by mass or less, more preferably 40 parts by mass or less, further preferably 30 parts by mass or less.

The liquid rubber is not particularly limited as long as it is a polymer in a liquid state at normal temperature (25°C), examples of which include, for example, a liquid butadiene rubber (liquid BR), a liquid styrene-butadiene rubber (liquid SBR), a liquid isoprene rubber (liquid IR), a liquid styrene-isoprene rubber (liquid SIR), a liquid farnesene rubber, and the like. These liquid rubbers may be used alone, or two or more thereof may be used in combination.

A content of the liquid rubber when compounded based on 100 parts by mass of the rubber component is preferably 1 part by mass or more, more preferably 3 parts by mass or more, further preferably 5 parts by mass or more. Moreover, the content is preferably 30 parts by mass or less, more preferably 20 parts by mass or less, further preferably 10 parts by mass or less.

A content of the softening agent based on 100 parts by mass of the rubber component of the rubber composition constituting the first layer is preferably 5 parts by mass or more, more preferably 6 parts by mass or more, further preferably 7 parts by mass or more, particularly preferably 8 parts by mass or more. Moreover, the content is preferably 60 parts by mass or less, more preferably 50 parts by mass or less, further preferably 45 parts by mass or less, particularly preferably 40 parts by mass or less.

A content of the softening agent based on 100 parts by mass of the rubber component of the rubber composition constituting the second layer is preferably 1 part by mass or more, more preferably 2 parts by mass or more, further preferably 3 parts by mass or more. Moreover, the content is preferably 50 parts by mass or less, more preferably 40 parts by mass or less, further preferably 30 parts by mass or less, particularly preferably 20 parts by mass or less.

A content of wax when compounded based on 100 parts by mass of the rubber component is preferably 0.5 parts by mass or more, more preferably 1.0 parts by mass or more, further preferably 1.5 parts by mass or more, from the viewpoint of weather resistance of a rubber. Moreover, it is preferably 10 parts by mass or less, more preferably 5.0 parts by mass or less, from the viewpoint of prevention of whitening of a tire due to bloom.

Examples of processing aid include, for example, a fatty acid metal salt, a fatty acid amide, an amide ester, a silica surfactant, a fatty acid ester, a mixture of a fatty acid metal salt and an amide ester, a mixture of a fatty acid metal salt and a fatty acid amide, and the like. The processing aid may be used alone, or two or more thereof may be used in combination. As processing aid, for example, those commercially available from Schill+Seilacher GmbH, Performance Additives, etc. can be used.

A content of processing aid when compounded based on 100 parts by mass of the rubber component is preferably 0.5 parts by mass or more, more preferably 1.0 parts by mass or more, further preferably 1.5 parts by mass or more, from the viewpoint of exhibiting an effect of improving processability. Moreover, it is preferably 10 parts by mass or less, more preferably 8.0 parts by mass or less, from the viewpoints of abrasion resistance and breaking strength.

Examples of the antioxidant include, but not particularly limited to, for example, amine-based, quinoline-based, quinone-based, phenol-based, and imidazole-based compounds, and antioxidants such as a carbamic acid metal salt and the like, and a phenylenediamine-based antioxidant such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, and the like; and a quinoline-based antioxidant such as 2,2,4-trimethyl-1,2-dihydroquinoline polymer, 6-ethoxy-2,2,4-trimethyl-1,2-dihydroquinoline, and the like are preferable. These antioxidants may be used alone, or two or more thereof may be used in combination.

A content of the antioxidant when compounded based on 100 parts by mass of the rubber component is preferably 0.5 parts by mass or more, more preferably 1.0 parts by mass or more, further preferably 1.5 parts by mass or more, from the viewpoint of ozone crack resistance of a rubber. Moreover, it is preferably 10 parts by mass or less, more preferably 5.0 parts by mass or less, from the viewpoints of abrasion resistance and wet grip performance.

A content of stearic acid when compounded based on 100 parts by mass of the rubber component is preferably 0.5 parts by mass or more, more preferably 1.0 parts by mass or more, further preferably 1.5 parts by mass or more, from the viewpoint of processability. Moreover, it is preferably 10 parts by mass or less, more preferably 5.0 parts by mass or less, from the viewpoint of vulcanization rate.

A content of zinc oxide when compounded based on 100 parts by mass of the rubber component is preferably 0.5 parts by mass or more, more preferably 1.0 parts by mass or more, further preferably 1.5 parts by mass or more, from the viewpoint of processability. Moreover, it is preferably 10.0 parts by mass or less, more preferably 5.0 parts by mass or less, from the viewpoint of abrasion resistance.

Sulfur is appropriately used as a vulcanizing agent. As sulfur, a powdery sulfur, an oil processing sulfur, a precipitated sulfur, a colloidal sulfur, an insoluble sulfur, a highly dispersible sulfur, and the like can be used.

A content of sulfur when compounded as the vulcanizing agent based on 100 parts by mass of the rubber component is preferably 0.1 parts by mass or more, more preferably 0.3 parts by mass or more, further preferably 0.5 parts by mass or more, from the viewpoint of securing a sufficient vulcanization reaction. Moreover, it is preferably 5.0 parts by mass or less, more preferably 4.0 parts by mass or less, further preferably 3.0 parts by mass or less, particularly preferably 2.5 parts by mass or less, from the viewpoint of prevention of deterioration. Besides, a content of the vulcanizing agent when an oil-containing sulfur is used as the vulcanizing agent is defined as a total content of pure sulfur contained in the oil-containing sulfur.

Examples of vulcanizing agents other than sulfur include, for example, an alkylphenol-sulfur chloride condensate, sodium hexamethylene-1,6-bisthiosulfate dihydrate, 1,6-bis(N,N'-dibenzylthiocarbamoyldithio)hexane, and the like. As these vulcanizing agents other than sulfur, those commercially available from Taoka Chemical Co., Ltd., LANXESS, Flexsys, etc. can be used.

Examples of the vulcanization accelerator include, for example, sulfenamide-based, thiazole-based, thiuram-based, thiourea-based, guanidine-based, dithiocarbamic acid-based, aldehyde-amine-based or aldehyde-ammonia-based, imidazoline-based, xanthate-based vulcanization accelerators, and the like. These vulcanization accelerators may be used alone, or two or more thereof may be used in combination. Among them, one or more vulcanization accelerators selected from the group consisting of sulfenamide-based, guanidine-based, and thiazole-based vulcanization accelerators are preferable, and the sulfenamide-based vulcanization accelerator is more preferable.

Examples of the sulfenamide-based vulcanization accelerator include, for example, N-tert-butyl-2-benzothiazolyl sulfenamide (TBBS), N-cyclohexyl-2-benzothiazolyl sulfenamide (CBS), N,N-dicyclohexyl-2-benzothiazolyl sulfenamide (DCBS), and the like. Among them, N-cyclohexyl-2-benzothiazolyl sulfenamide (CBS) is preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatechol borate, 1,3-di-o-cumenyl guanidine, 1,3-di-o-biphenyl guanidine, 1,3-di-o-cumenyl-2-propionyl guanidine, and the like. Among them, 1,3-diphenylguanidine (DPG) is preferable.

Examples of the thiazole-based vulcanization accelerator include, for example, 2-mercaptobenzothiazole, cyclohexylamine salt of 2-mercaptobenzothiazole, di-2-benzothiazolyl disulfide, and the like. Among them, 2-mercaptobenzothiazole is preferable.

A content of the vulcanization accelerator when compounded based on 100 parts by mass of the rubber component (a total amount of all of a plurality of vulcanization accelerators when used in combination) is preferably 1.0 parts by mass or more, more preferably 2.0 parts by mass or more, further preferably 2.5 parts by mass or more. Moreover, the content is preferably 8.0 parts by mass or less, more preferably 7.0 parts by mass or less, further preferably 6.0 parts by mass or less. When the content of the vulcanization accelerator is within the above-described ranges, breaking strength and elongation tend to be secured.

### <Production>

The rubber composition according to the present embodiment can be produced by a known method. For example, it can be produced by kneading the respective above-described components with a rubber kneading machine such as an open roll, a sealed type kneader (a Banbury mixer, a kneader, and the like), and the like.

The kneading step includes, for example, a base kneading step of kneading compounding agents and additives other than a vulcanizing agent and a vulcanization accelerator; and a final kneading (F-kneading) step of adding the vulcanizing agent and the vulcanization accelerator to the kneaded product obtained in the base kneading step and kneading them. Additionally, the base kneading step can also be divided into multiple steps as necessary.

Examples of kneading conditions include, but not particularly limited to, for example, a method of kneading at a discharge temperature of 150°C to 170°C for 3 to 10 minutes in the base kneading step and kneading at 70°C to 110°C for 1 to 5 minutes in the final kneading step. Examples of vulcanization conditions include, but not particularly limited to, for example, a method of vulcanizing at 150°C to 200°C for 10 to 30 minutes.

The tire comprising the tread including the first layer 6 and the second layer 7 can be produced using the respective corresponding rubber compositions by a usual method. That is, the tire can be produced by extruding unvulcanized rubber compositions, which are obtained by the above-described method and correspond to the respective rubber layers, into the shapes of the respective rubber layers with an extruder equipped with a mouthpiece having a predetermined shape, attaching them together with other tire members on a tire forming machine, and molding them by a usual method to form an unvulcanized tire, followed by heating and pressurizing this unvulcanized tire in a vulcanizing machine. Examples of vulcanization conditions include, but not particularly limited to, for example, a method of vulcanizing at 150°C to 200°C for 10 to 30 minutes.

### <Application>

The tire according to the present embodiment can be appropriately used as a tire for a passenger car, a tire for a truck/bus, a motorcycle tire, or a racing tire, and among them, the tire is preferably used as a tire for a passenger car. Besides, the tire for a passenger car refers to a tire that is presupposed to be mounted to a vehicle running with four wheels and that has a maximum load capacity of 1000 kg or less. Moreover, the tire according to the present embodiment can be used as an all-season tire, a summer tire, or a winter tire such as a studless tire.

### EXAMPLES

The present invention will be described based on Examples, though the present invention is not limited to only these Examples.

For a tire comprising a tread part composed of a rubber composition obtained in accordance with Table 1 using various chemicals described below, results calculated based on evaluation methods described below are shown in Tables 1 and 2.
NR: TSR 20
BR 1: BR150B manufactured by Ube Industries, Ltd. (unmodified high-cis BR, cis content: 97 mol%, Mw: 440,000)
BR 2: BR730 manufactured by JSR Corporation (unmodified high-cis BR, cis content: 95 mol%, Mw: 580,000)
Carbon black 1: SHOW BLACK N330 manufactured by Cabot Japan K.K. (N₂SA: 75 m²/g)
Carbon black 2: SHOW BLACK N220 manufactured by Cabot Japan K.K. (N₂SA: 111 m²/g)
Recovered carbon black: carbon black resulting from pulverization and firing of a waste tire (ach content: 17% by mass)
Silica: Ultrasil VN3 manufactured by Evonik Degussa GmbH (N₂SA: 175 m²/g)
Silane coupling agent: Si69 manufactured by Evonik Degussa GmbH (bis(3-triethoxysilylpropyl)tetrasulfide)
Oil: PROCESS X-140 of ENEOS Corporation
Wax: Hi-Mic-1080 of Nippon Seiro Co., Ltd. (microcrystalline wax)
Resin component: SYLVATRAXX 4401 manufactured by Kraton Corporation (softening point: 85°C, glass transition temperature: 39°C)
Antioxidant: Nocrac 6C manufactured by Ouchi Shinko Chemical Industry Co., Ltd. (N-phenyl-N'-(1,3-dimethylbutyl)-p-phenylenediamine (6PPD))
Stearic acid: Bead stearic acid "CAMELLIA" manufactured by NOF CORPORATION
Zinc oxide: Zinc oxide No. 1 manufactured by Mitsui Mining & Smelting Co., Ltd.
Sulfur: HK-200-5 manufactured by Hosoi Chemical Industry Co., Ltd. (5% oil-containing powdered sulfur)
Vulcanization accelerator 1: Nocceler CZ manufactured by Ouchi Shinko Chemical Industry Co., Ltd. (N-cyclohexyl-2-benzothiazolylsulfenamide (CBS))
Vulcanization accelerator 2: Nocceler D manufactured by Ouchi Shinko Chemical Industry Co., Ltd. (1,3-diphenylguanidine (DPG))

### (Examples and Comparative examples)

According to the compounding formulations shown in Table 1, using a 1.7 L closed Banbury mixer, chemicals other than sulfur and a vulcanization accelerator are kneaded for 1 to 10 minutes until the temperature reaches a discharge temperature of 150 to 160°C, to obtain a kneaded product. Next, using a twin-screw open roll, sulfur and the vulcanization accelerator are added to the obtained kneaded product, and the mixture is kneaded for 4 minutes until the temperature reaches 105°C, to obtain unvulcanized rubber compositions. The obtained unvulcanized rubber compositions are molded into shapes of a first layer and /or a second layer of a tread and attached together with other tire members to produce an unvulcanized tire, and the unvulcanized tire is vulcanized at 170°C, thereby obtaining test tires listed in Table 2. Besides, a groove depth H of each circumferential groove, presence or absence of an inclined groove, and a maximum width L of the inclined groove are as shown in Table 2.

### < Measurement of 70°CE* and 70°C tan δ>

For each vulcanized rubber test piece collected to have a length of 20 mm, a width of 4 mm, and a thickness of 1 mm by being cut out from the inside of a first layer or a second layer of a tread part of each test tire such that a tire circumferential direction becomes a long side and a tire radial direction becomes a thickness direction, a complex elastic module E* and a loss tangent tan δ are measured using a dynamic viscoelasticity measuring device (EPLEXOR series manufactured by gabo Systemtechnik GmbH) under a condition of a temperature at 70°C, a frequency of 10 Hz, an initial strain of 5%, a dynamic strain of ±1%, and an extension mode according to JIS K 6394: 2007.

### < Measurement of Shore hardness>

A sample for measurement of hardness is prepared from inside of a first layer or a second layer of a tread part of each test tire such that the tire radial direction becomes a thickness direction, and a rubber hardness is measured at 23°C according to JIS K 6253 while pressing a type-A durometer against the sample from the ground-contacting-surface side.

### <Tensile test>

A No. 7 dumbbell-shaped test piece with a thickness of 1 mm is cut out from inside of a first layer or a second layer of a tread part of each test tire so that a tire circumferential direction became a tensile direction, and a tensile test is performed according to JIS K 6251: 2017 "Rubber, vulcanized or thermoplastics-Determination of tensile stress-strain properties" under a condition of a tensile speed of 3.3 mm/sec in an atmosphere at 23 °C to measure modulus at 100% elongation, in MPa. Besides, a direction of a thickness of the sample is set to be a tire radial direction.

### <Grip performance on an icy road during high-speed running>

Each test tire is filled with air at 250 kPa and mounded on an automobile with a displacement of 2000 cc. During running of this automobile at an initial speed of 60 km/h on an icy road surface, a brake is applied to measure a braking distance. An inverse value of the braking distance is indicated as an index with a braking distance of Comparative example 4 being as 100. The results show that the higher the index is, the more excellent the wet grip performance during high-speed running is.

**Table 1**

| | Rubber compounding in tread part | | | | | | | |
|---|---|---|---|---|---|---|---|---|
| | 1 | 2 | 3 | 4 | 5 | 6 | 7 | 8 |
| Compounding amount (part by mass) | | | | | | | | |
| NR | 45 | 45 | 45 | 45 | 40 | 40 | 40 | 40 |
| BR 1 | 55 | 55 | 55 | 55 | - | - | - | - |
| BR 2 | - | - | - | - | 60 | 60 | 60 | 60 |
| Carbon black 1 | 75.0 | 70.0 | 60.0 | 50.0 | - | - | - | - |
| Carbon black 2 | - | - | - | - | 7.0 | 7.0 | 7.0 | 7.0 |
| rCB | - | 5.0 | 15.0 | 25.0 | - | 10.0 | 20.0 | 30.0 |
| Silica | - | - | - | - | 64.0 | 58.0 | 50.0 | 42.0 |
| Silane coupling agent | - | - | - | - | 1.8 | 1.7 | 1.6 | 1.5 |
| Oil | 23.0 | 23.5 | 24.5 | 24.0 | 35.0 | 34.0 | 33.0 | 32.0 |
| Resin component | - | - | - | - | 3.2 | 3.2 | 3.2 | 3.2 |
| Wax | 1.5 | 1.5 | 1.5 | 1.5 | 1.5 | 1.5 | 1.5 | 1.5 |
| Antioxidant | 2.0 | 2.0 | 2.0 | 2.0 | 2.0 | 2.0 | 2.0 | 2.0 |
| Stearic acid | 3.0 | 3.0 | 3.0 | 3.0 | 2.0 | 2.0 | 2.0 | 2.0 |
| Zinc oxide | 2.5 | 2.5 | 2.5 | 2.5 | 2.0 | 2.0 | 2.0 | 2.0 |
| Sulfur | 2.2 | 2.2 | 2.2 | 2.2 | 0.9 | 0.9 | 0.9 | 0.9 |
| Vulcanization accelerator 1 | 1.0 | 1.0 | 1.0 | 1.0 | 1.8 | 1.7 | 1.6 | 1.5 |
| Vulcanization accelerator 2 | - | - | - | - | 0.8 | 0.7 | 0.6 | 0.5 |
| NR/rCB | - | 9.0 | 3.0 | 1.8 | - | 4.0 | 2.0 | 1.3 |
| 70°CE* (MPa) | 7.1 | 7.0 | 6.9 | 6.8 | 4.7 | 4.5 | 4.4 | 4.4 |
| 70°C tan δ | 0.20 | 0.20 | 0.19 | 0.18 | 0.16 | 0.15 | 0.15 | 0.15 |
| Shore hardness | 60.2 | 60.4 | 60.8 | 61.0 | 54.1 | 54.2 | 54.4 | 54.6 |
| 100% modulus | 2.2 | 2.2 | 2.3 | 2.4 | 1.2 | 1.3 | 1.3 | 1.4 |

**Table 2**

| | Example | | | | | | | |
|---|---|---|---|---|---|---|---|---|
| | 1 | 2 | 3 | 4 | 5 | 6 | 7 | 8 |
| Compounding for first layer | 3 | 6 | 6 | 6 | 6 | 7 | 7 | 8 |
| Compounding for second layer | 2 | 2 | 2 | 2 | 2 | 2 | 3 | 3 |
| Content of rCB (part by mass) | | | | | | | | |
| First layer (C) | 15.0 | 10.0 | 10.0 | 10.0 | 10.0 | 20.0 | 20.0 | 30.0 |
| Second layer (B) | 5.0 | 5.0 | 5.0 | 5.0 | 5.0 | 5.0 | 15.0 | 15.0 |
| 70°CE* (MPa) | | | | | | | | |
| First layer (E*1) | 6.9 | 4.5 | 4.5 | 4.5 | 4.5 | 4.4 | 4.4 | 4.4 |
| Second layer (E*2) | 7.0 | 7.0 | 7.0 | 7.0 | 7.0 | 7.0 | 6.9 | 6.9 |
| 70°C tan δ | | | | | | | | |
| First layer | 0.19 | 0.15 | 0.15 | 0.15 | 0.15 | 0.15 | 0.15 | 0.15 |
| Second layer | 0.20 | 0.20 | 0.20 | 0.20 | 0.20 | 0.20 | 0.19 | 0.19 |
| Shore hardness (Hs) | | | | | | | | |
| First layer | 60.8 | 54.2 | 54.2 | 54.2 | 54.2 | 54.4 | 54.4 | 54.6 |
| Second layer | 60.4 | 60.4 | 60.4 | 60.4 | 60.4 | 60.4 | 60.8 | 60.8 |
| 100% modulus (MPa) | | | | | | | | |
| First layer | 2.3 | 1.3 | 1.3 | 1.3 | 1.3 | 1.3 | 1.3 | 1.4 |
| Second layer | 2.2 | 2.2 | 2.2 | 2.2 | 2.2 | 2.2 | 2.3 | 2.3 |
| B/C | 0.33 | 0.50 | 0.50 | 0.50 | 0.50 | 0.25 | 0.75 | 0.50 |
| t1 (mm) | 9.0 | 9.0 | 8.0 | 6.0 | 7.0 | 7.0 | 7.0 | 7.0 |
| t2 (mm) | 1.0 | 1.0 | 2.0 | 4.0 | 3.0 | 3.0 | 3.0 | 3.0 |
| t1/(t1+t2) | 0.90 | 0.90 | 0.80 | 0.60 | 0.70 | 0.70 | 0.70 | 0.70 |
| C×t1/(t1+t2) | 13.5 | 9.0 | 8.0 | 6.0 | 7.0 | 14.0 | 14.0 | 21.0 |
| 70°CE*1/70°CE*2 | 0.99 | 0.64 | 0.64 | 0.64 | 0.64 | 0.63 | 0.64 | 0.64 |
| Groove depth H of deepest part of circumferential groove (mm) | 8.5 | 8.5 | 8.5 | 8.5 | 8.5 | 8.5 | 8.5 | 8.5 |
| H×C | 127.5 | 85.0 | 85.0 | 85.0 | 85.0 | 170.0 | 170.0 | 255.0 |
| I/C | 3.0 | 4.0 | 4.0 | 4.0 | 4.0 | 2.0 | 2.0 | 1.33 |
| Inclined groove | Presence | Presence | Presence | Presence | Presence | Presence | Presence | Presence |
| Maximum width L of inclined groove (mm) | 15 | 10 | 8 | 8 | 5 | 8 | 5 | 8 |
| L/C | 1.00 | 1.00 | 0.80 | 0.80 | 0.50 | 0.40 | 0.25 | 0.27 |
| Grip performance on icy road during high-speed running | 110 | 114 | 116 | 120 | 122 | 124 | 126 | 120 |

| | Example | | | Comparative example | | | | |
|---|---|---|---|---|---|---|---|---|
| | 9 | 10 | 11 | 1 | 2 | 3 | 4 | |
| Compounding for first layer | 8 | 6 | 6 | 1 | 2 | 1 | 2 | |
| Compounding for second layer | 4 | 2 | 2 | 5 | 1 | 2 | 3 | |
| Content of rCB (part by mass) | | | | | | | | |
| First layer (C) | 30.0 | 10.0 | 10.0 | 0 | 5.0 | 0 | 5.0 | |
| Second layer (B) | 25.0 | 5.0 | 5.0 | 0 | 0 | 5.0 | 15.0 | |
| 70°CE* (MPa) | | | | | | | | |
| First layer (E*1) | 4.4 | 4.5 | 4.5 | 7.1 | 7.0 | 7.1 | 7.0 | |
| Second layer (E*2) | 6.8 | 7.0 | 7.0 | 4.7 | 7.0 | 7.00 | 6.9 | |
| 70°C tan δ | | | | | | | | |
| First layer | 0.15 | 0.16 | 0.16 | 0.19 | 0.18 | 0.19 | 0.18 | |
| Second layer | 0.18 | 0.20 | 0.20 | 0.16 | 0.20 | 0.20 | 0.19 | |
| Shore hardness (Hs) | | | | | | | | |
| First layer | 54.6 | 54.2 | 54.2 | 60.2 | 60.4 | 60.2 | 60.4 | |
| Second layer | 61.0 | 60.4 | 60.4 | 54.1 | 60.2 | 60.4 | 60.8 | |
| 100% modulus (MPa) | | | | | | | | |
| First layer | 1.4 | 1.3 | 1.3 | 2.2 | 2.2 | 2.2 | 2.2 | |
| Second layer | 2.4 | 2.2 | 2.2 | 1.2 | 2.2 | 2.2 | 2.3 | |
| B/C | 0.83 | 0.50 | 0.50 | - | 0 | - | 3.00 | |
| t1 (mm) | 7.0 | 7.0 | 7.0 | 9.0 | 9.0 | 9.0 | 9.0 | |
| t2 (mm) | 3.0 | 3.0 | 3.0 | 1.0 | 1.0 | 1.0 | 1.0 | |
| t1/(t1+t2) | 0.70 | 0.70 | 0.70 | 0.90 | 0.90 | 0.90 | 0.90 | |
| C×t1/(t1+t2) | 21.0 | 7.0 | 7.0 | - | 4.5 | - | 4.5 | |
| 70°CE*1/70°CE*2 | 0.65 | 0.64 | 0.64 | 1.51 | 1.00 | 1.01 | 1.01 | |
| Groove depth H of deepest part of circumferential groove (mm) | 8.5 | 8.5 | 9.0 | 8.5 | 8.5 | 8.5 | 8.5 | |
| H×C | 255.0 | 85.0 | 90.0 | 0 | 42.5 | 0 | 42.5 | |
| I/C | 1.33 | 4.0 | 4.0 | | 9.0 | | 9.0 | |
| Inclined groove | Presence | Absence | Presence | Presence | Presence | Presence | Presence | |
| Maximum width L of inclined groove (mm) | 5 | - | 3 | 8 | 10 | 5 | 8 | |
| L/C | 0.17 | - | 0.30 | - | 2.00 | | 1.60 | |
| Grip performance on icy road during high-speed running | 118 | 106 | 108 | 96 | 98 | 98 | 100 | |

### REFERENCE SIGNS LIST

- 1: Circumferential groove
- 2: Land part
- 3: Tread surface
- 4: Extension line of land part
- 5: Extension line of deepest part of groove bottom
- 6: First layer
- 7: Second layer
- 8: Tread part
- 9: Extension line of outermost part of second layer
- 10: Groove edge
- 11: Lateral groove (inclined groove)
- 12: Shoulder land part
- 13: Center land part
- 21: Lateral groove
- 22: Shoulder sipe
- 23: Center sipe
- t1: Thickness of first layer
- t2: Thickness of second layer
- H: Groove depth of circumferential groove
- C: Tire equator
- W: Tire width direction
- Te: Tread end

## Claims

1. A tire comprising a tread part,
wherein the tread part comprises
a first layer constituting a tread surface, and
a second layer adjacent to an inner side of the first layer in a tire radial direction,
wherein each of the first layer and the second layer is composed of a rubber composition comprising a rubber component and a recovered carbon black, and
wherein B/C is 1.0 or less, where a content of the recovered carbon black based on 100 parts by mass of a rubber component of a rubber composition constituting the first layer is referred to as C, in parts by mass, and a content of the recovered carbon black based on 100 parts by mass of a rubber component of a rubber composition constituting the second layer is referred to as B, in parts by mass,
wherein the term "recovered carbon black" refers to carbon black that is obtained by pulverizing a product comprising carbon black and firing the pulverized product, in which, when the product is subjected to oxidative combustion by heating in the air, using a thermal weight measurement method according to JIS K 6226-2:2003, a ratio of a mass of ash, which is a component that does not combust, is 13% by mass or more.

2. The tire of claim 1, wherein 70°CE*1/70°CE*2 is 0.70 or less, where a complex elastic modulus at 70°C of the rubber composition constituting the first layer is referred to as 70°CE*1, in MPa, and a complex elastic modulus at 70°C of the rubber composition constituting the second layer is referred to as 70°CE*2, in MPa, wherein the complex elastic modulus at 70°C is measured according to the method given in the description.

3. The tire of claim 1 or 2, wherein a 100% modulus of the rubber composition constituting the second layer is greater than a 100% modulus of the rubber composition constituting the first layer, wherein the 100% modulus is measured according to the method given in the description.

4. The tire of any one of claims 1 to 3, wherein a ratio (t1/(t1+t2)) of t1 to a sum of t1 and t2 is 0.80 or less, preferably 0.75 or less, more preferably 0.72 or less, where a thickness of the first layer is referred to as t1, in mm, and a thickness of the second layer is referred to as t2, in mm.

5. The tire of any one of claims 1 to 4, wherein C×t1/(t1+t2) is 20.0 or less, more preferably 15.0 or less, more preferably 12.0 or less, further preferably 10.0 or less, where a thickness of the first layer is referred to as t1, in mm, and a thickness of the second layer is referred to as t2, in mm.

6. The tire of any one of claims 1 to 5, wherein the tread part comprises one or more circumferential grooves extending continuously in a tire circumferential direction, and a product (H×C) of a groove depth H, in mm, of a deepest part of each of the circumferential grooves and C, in parts by mass, is 200 or less.

7. The tire of any one of claims 1 to 6, wherein the tread part comprises a groove inclined in the tire circumferential direction or in a tire width direction, and a ratio (L/C) of a maximal width L, in mm, of the groove inclined in the tire circumferential direction or in the tire width direction to C, in parts by mass, is 0.30 or more, preferably 0.40 or more, more preferably 0.50 or more.

8. The tire of any one of claims 1 to 7, wherein a tan δ at 70°C of the rubber composition constituting the second layer (70°C tan δ2) is greater than 0.02 and less than 0.20, wherein the tan δ at 70°C is measured according to the method given in the description.

9. The tire of any one of claims 1 to 8, wherein a Shore hardness Hs of the rubber composition constituting the first layer is greater than 55 and less than 80, wherein the Shore hardness Hs is measured according to the method given in the description.

10. The tire of any one of claims 1 to 9, wherein I/C is 1.20 or more, preferably 2.0 or more, more preferably 3.0 or more, where a content of an isoprene-based rubber in the rubber component of the rubber composition constituting the first layer is referred to as I, in % by mass.

11. The tire of any one of claims 1 to 10, wherein the recovered carbon black is a recovered carbon black resulting from firing of a waste tire and/or a waste tire tube.

12. The tire of claim 11, wherein the waste tire and/or the waste tire tube comprises a diene-based rubber.

13. The tire of any one of claims 1 to 12, wherein the tire is a tire for a passenger car.

## Patentansprüche

1. Reifen, umfassend einen Laufstreifenteil,
wobei der Laufstreifenteil umfasst:
eine erste Schicht, die eine Laufstreifenoberfläche bildet, und
eine zweite Schicht, die zu einer inneren Seite der ersten Schicht in einer Reifenradialrichtung benachbart ist,
wobei jede von der ersten Schicht und der zweiten Schicht mit einer Kautschukzusammensetzung aufgebaut ist, die eine Kautschukkomponente und einen rückgewonnenen Ruß umfasst, und
wobei B/C 1,0 oder weniger beträgt, worin ein Gehalt des rückgewonnenen Rußes bezogen auf 100 Massenteile einer Kautschukkomponente einer Kautschukzusammensetzung, welche die erste Schicht bildet, als C, in Massenteilen, bezeichnet ist, und ein Gehalt des rückgewonnenen Rußes bezogen auf 100 Massenteile einer Kautschukkomponente einer Kautschukzusammensetzung, welche die zweite Schicht bildet, als B, in Massenteilen, bezeichnet ist,
wobei der Begriff "rückgewonnener Ruß" Ruß bezeichnet, der durch Pulverisieren eines Produkts, das Ruß umfasst, und Brennen des pulverisierten Produkts erhalten ist, in welchem, wenn das Produkt oxidativer Verbrennung durch Erhitzen an der Luft unterzogen wird, unter Verwendung eines thermischen Gewichtsmessungsverfahrens gemäß JIS K 6226-2:2003, ein Anteil einer Masse von Asche, welche eine Komponente ist, die nicht verbrennt, 13 Massen-% oder mehr beträgt.

2. Reifen nach Anspruch 1, wobei 70°CE*1/70°CE*2 0,70 oder weniger beträgt, worin ein komplexer Elastizitätsmodul bei 70°C der Kautschukzusammensetzung, welche die erste Schicht bildet, als 70°CE*1, in MPa, bezeichnet ist, und ein komplexer Elastizitätsmodul bei 70°C der Kautschukzusammensetzung, welche die zweite Schicht bildet, als 70°CE*2, in MPa, bezeichnet ist, wobei der komplexe Elastizitätsmodul bei 70°C gemäß dem in der Beschreibung angegebenen Verfahren gemessen ist.

3. Reifen nach Anspruch 1 oder 2, wobei ein 100%-Modul der Kautschukzusammensetzung, welche die zweite Schicht bildet, größer ist als ein 100%-Modul der Kautschukzusammensetzung, welche die erste Schicht bildet, wobei der 100%-Modul gemäß dem in der Beschreibung angegebenen Verfahren gemessen ist.

4. Reifen nach einem der Ansprüche 1 bis 3, wobei ein Verhältnis (t1/(t1+t2)) von t1 zu einer Summe von t1 und t2 0,80 oder weniger beträgt, bevorzugt 0,75 oder weniger, bevorzugter 0,72 oder weniger, worin eine Dicke der ersten Schicht als t1, in mm, bezeichnet ist, und eine Dicke der zweiten Schicht als t2, in mm, bezeichnet ist.

5. Reifen nach einem der Ansprüche 1 bis 4, wobei C×t1/(t1+t2) 20,0 oder weniger beträgt, bevorzugter 15,0 oder weniger, bevorzugter 12,0 oder weniger, weiter bevorzugt 10,0 oder weniger, worin eine Dicke der ersten Schicht als t1, in mm, bezeichnet ist, und eine Dicke der zweiten Schicht als t2, in mm, bezeichnet ist.

6. Reifen nach einem der Ansprüche 1 bis 5, wobei der Laufstreifenteil eine oder mehrere Umfangsrillen umfasst, die sich durchgehend in einer Reifenumfangsrichtung erstrecken, und ein Produkt (H×C) aus einer Rillentiefe H, in mm, eines tiefsten Teils jeder der Umfangsrillen und C, in Massenteilen, 200 oder weniger beträgt.

7. Reifen nach einem der Ansprüche 1 bis 6, wobei der Laufstreifenteil eine in der Reifenumfangsrichtung oder in einer Reifenbreitenrichtung geneigte Rille umfasst, und ein Verhältnis (L/C) einer maximalen Breite L, in mm, der in der Reifenumfangsrichtung oder in der Reifenbreitenrichtung geneigten Rille zu C, in Massenteilen, 0,30 oder mehr beträgt, bevorzugt 0,40 oder mehr, bevorzugter 0,50 oder mehr.

8. Reifen nach einem der Ansprüche 1 bis 7, wobei ein tan δ bei 70°C der Kautschukzusammensetzung, welche die zweite Schicht bildet (70°C tan δ2), größer als 0,02 und kleiner als 0,20 ist, wobei der tan δ bei 70°C gemäß dem in der Beschreibung angegebenen Verfahren gemessen ist.

9. Reifen nach einem der Ansprüche 1 bis 8, wobei eine Shore-Härte Hs der Kautschukzusammensetzung, welche die erste Schicht bildet, größer als 55 und kleiner als 80 ist, wobei die Shore-Härte Hs gemäß dem in der Beschreibung angegebenen Verfahren gemessen ist.

10. Reifen nach einem der Ansprüche 1 bis 9, wobei I/C 1,20 oder mehr beträgt, bevorzugt 2,0 oder mehr, bevorzugter 3,0 oder mehr, worin ein Gehalt eines Isopren-basierten Kautschuks in der Kautschukkomponente der Kautschukzusammensetzung, welche die erste Schicht bildet, als I, in Massen-%, bezeichnet ist.

11. Reifen nach einem der Ansprüche 1 bis 10, wobei der rückgewonnene Ruß ein aus dem Brennen eines Abfallreifens und/oder eines Abfallreifenschlauchs entstandener rückgewonnener Ruß ist.

12. Reifen nach Anspruch 11, wobei der Abfallreifen und/oder der Abfallreifenschlauch einen Dien-basierten Kautschuk umfasst.

13. Reifen nach einem der Ansprüche 1 bis 12, wobei der Reifen ein Reifen für einen Personenkraftwagen ist.

## Revendications

1. Pneumatique comprenant une partie de bande de roulement,
dans lequel la partie de bande de roulement comprend
une première couche constituant une surface de bande de roulement, et
une seconde couche adjacente à un côté interne de la première couche dans une direction radiale de pneumatique,
dans lequel chacune de la première couche et de la seconde couche est composée d'une composition de caoutchouc comprenant un composant de caoutchouc et un noir de charbon récupéré, et
dans lequel B/C est de 1,0 ou moins, où une teneur du noir de charbon récupéré sur la base de 100 parties en masse d'un composant de caoutchouc d'une composition de caoutchouc constituant la première couche est rapportée comme C, en parties en masse, et une teneur du noir de charbon récupéré sur la base de 100 parties en masse d'un composant de caoutchouc d'une composition de caoutchouc constituant la seconde couche est rapportée comme B, en parties en masse,
dans lequel le terme « noir de charbon récupéré » se rapporte à un noir de charbon qui est obtenu en pulvérisant un produit comprenant du noir de charbon et en brûlant le produit pulvérisé, dans lequel, lorsque le produit est soumis à une combustion oxydative par chauffage dans l'air, en utilisant un procédé de mesure de poids thermique selon la norme JIS K 6226-2 : 2003, un rapport d'une masse de cendre, qui est un composant qui ne brûle pas, est de 13 % en masse ou plus.

2. Pneumatique selon la revendication 1, dans lequel 70 °CE*1/70°CE*2 est de 0,70 ou moins, où un module élastique complexe à 70 °C de la composition de caoutchouc constituant la première couche est rapporté comme 70 °CE*1, en Mpa, et un module élastique complexe à 70 °C de la composition de caoutchouc constituant la seconde couche est rapporté comme 70 °CE*2, en MPa, le module élastique complexe à 70 °C étant mesuré selon le procédé donné dans la description.

3. Pneumatique selon la revendication 1 ou 2, dans lequel un module de 100 % de la composition de caoutchouc constituant la seconde couche est plus grand qu'un module de 100 % de la composition de caoutchouc constituant la première couche, le module de 100 % étant mesuré selon le procédé donné dans la description.

4. Pneumatique selon l'une quelconque des revendications 1 à 3, dans lequel un rapport (t1/(t1 + t2)) de t1 à une somme de t1 et de t2 est de 0,80 ou moins, de préférence de 0,75 ou moins, davantage de préférence de 0,72 ou moins, où une épaisseur de la première couche est rapportée comme t1, en mm, et une épaisseur de la seconde couche est rapportée comme t2, en mm.

5. Pneumatique selon l'une quelconque des revendications 1 à 4, dans lequel C × t1/(t1 + t2) est de 20,0 ou moins, davantage de préférence de 15,0 ou moins, davantage de préférence de 12,0 ou moins, encore de préférence de 10,0 ou moins, où une épaisseur de la première couche est rapportée comme t1, en mm, et une épaisseur de la seconde couche est rapportée comme t2, en mm.

6. Pneumatique selon l'une quelconque des revendications 1 à 5, dans lequel la partie de bande de roulement comprend un ou plusieurs rainures circonférentielles s'étendant en continu dans une direction circonférentielle de pneumatique, et un produit (H × C) d'une profondeur de sillon **H,** en mm, d'une partie la plus profonde de chacun des plusieurs rainures circonférentielles et C, en parties en masse, est de 200 ou moins.

7. Pneumatique selon l'une quelconque des revendications 1 à 6, dans lequel la partie de bande de roulement comprend une rainure inclinée dans la direction circonférentielle de pneumatique ou dans une direction de largeur de pneumatique, et un rapport (L/C) d'une largeur maximale **L,** en mm, de la rainure inclinée dans la direction circonférentielle de pneumatique ou dans la direction de largeur de pneumatique à C, en parties en masse, est de 0,30 ou plus ou davantage de préférence de 0,40 ou plus, davantage de préférence de 0,50 ou plus.

8. Pneumatique selon l'une quelconque des revendications 1 à 7, dans lequel une tan δ à 70 °C de la composition de caoutchouc constituant la seconde couche (70 °C tan δ 2) est plus grande que 0,02 et de moins de 0,20, la tan δ à 70 °C étant mesurée selon le procédé donné dans la description.

9. Pneumatique selon l'une quelconque des revendications 1 à 8, dans lequel une dureté de Shore Hs de la composition de caoutchouc constituant la première couche est plus grande que 55 et de moins de 80, la dureté de Shore Hs étant mesurée selon le procédé donné dans la description.

10. Pneumatique selon l'une quelconque des revendications 1 à 9, dans lequel I/C est de 1,20 ou plus, de préférence de 2,0 ou plus, davantage de préférence de 3,0 ou plus, où une teneur d'un caoutchouc à base d'isoprène dans le composant de caoutchouc de la composition de caoutchouc constituant la première couche est rapportée comme **I,** en % en masse.

11. Pneumatique selon l'une quelconque des revendications 1 à 10, dans lequel le noir de charbon récupéré est un noir de charbon récupéré résultant du brûlage d'un pneumatique de déchet et/ou d'un tube de pneumatique de déchet.

12. Pneumatique selon la revendication 11, dans lequel le pneumatique de déchet et/ou le tube de pneumatique de déchet comprend un caoutchouc à base de diène.

13. Pneumatique selon l'une quelconque des revendications 1 à 12, dans lequel le pneumatique est un pneumatique pour une voiture de tourisme.
